# EUROPÄISCHE PATENTSCHRIFT

(11) **EP 2 874 764 B1**
(45) Veröffentlichungstag und Bekanntmachung des Hinweises auf die Patenterteilung: **17.08.2016**
(21) Anmeldenummer: 13739928.3
(22) Anmeldetag: 12.06.2013
(51) Int. Cl.: B21D 5/02

(54) **BIEGEPRESSE MIT WINKELERFASSUNGSVORRICHTUNG SOWIE VERFAHREN ZUR ERMITTLUNG DES BIEGEWINKELS**
BENDING PRESS HAVING AN ANGLE-MEASURING DEVICE AND METHOD FOR DETERMINING THE BENDING ANGLE
PRESSE À CINTRER POURVUE D'UN DISPOSITIF DE DÉTECTION D'ANGLE ET PROCÉDÉ DE DÉTERMINATION DE L'ANGLE DE PLIAGE

(30) Priorität: 18.06.2012 AT 6922012
(43) Veröffentlichungstag der Anmeldung: 27.05.2015
(73) Patentinhaber: TRUMPF Maschinen Austria GmbH & Co. KG., 4061 Pasching (AT)
(72) Erfinder: ANGERER, Gerhard, A-4203 Altenberg (AT); BÖCK, Harald, A-4470 Enns (AT); FREUDENTHALER, Klemens, A-4020 Linz (AT); GAGGL, Josef, A-4400 Steyr (AT); HÖRL, Matthias, A-6372 Oberndorf/Tirol (AT); SCHNEIDER, Bernhard, A-4860 Lenzing (AT); STRASSER, Hagen, A-4061 Pasching (AT); THEIS, Helmut, A-4540 Pfarrkirchen (AT); WALDHERR, Manfred, A-4040 Linz (AT); WEISS, Thomas, A-4020 Linz (AT)
(74) Vertreter: Burger, Hannes
(86) Internationale Anmeldenummer: PCT/AT2013/050119
(87) Internationale Veröffentlichungsnummer: WO 2013/188896

(56) Entgegenhaltungen:
- EP-A1- 1 319 450
- EP-B1- 0 637 371
- DE-T2- 69 411 821
- JP-A- 2001 121 216
- JP-A- 2001 330 403

## Beschreibung

Die Erfindung betrifft eine Fertigungsanlage, insbesondere für das Abkanten von aus Blech zu fertigenden Werkstücken, mit einer Winkelerfassungsvorrichtung sowie ein Verfahren zur Ermittlung einer Winkelstellung von zumindest einem durch einen Biegevorgang gebildeten Schenkel bezüglich einer Referenzebene, wie dies in den Ansprüchen 1 und 9 beschrieben ist.

Aus der EP 0 637 371 B1 bzw. der daraus hervorgegangenen DE 694 11 821 T2 ist eine Vorrichtung zum Messen eines Winkels an einem Werkstück bekannt geworden, bei dem in einem Grundkörper des Biegewerkzeugs Fühler vorgesehen sind, die relativ zum Grundkörper bewegbar sind. Jeder der Fühler weist Kontakteinrichtungen zum Kontakt mit dem jeweiligen Abschnitt des Werkstücks während der Messung auf, wobei die Fühler voneinander kinematisch vollständig unabhängig sind. Weiters weist die Vorrichtung eigene Druckeinrichtungen auf, um die Kontakteinrichtungen der Fühler in Kontakt mit den jeweiligen Abschnitten des Werkstücks zu bringen, das vermessen wird. Dabei sind die Druckeinrichtungen, die einem Fühler zugeordnet sind, vollständig unabhängig von den Druckeinrichtungen, die dem jeweils anderen Fühler zugeordnet sind. Weiters erlauben die Druckeinrichtung es dem jeweiligen Fühler, eine translatorische Bewegung relativ zu dem Grundkörper vollständig und unabhängig von der Bewegung des anderen Fühlers auszuführen. Darüber hinaus ist eine Sensoreinrichtung vorgesehen, die zur Erfassung der Position der Fühler relativ zu dem Grundkörper dient. Jeder der Fühler weist dabei eine aktive Oberfläche für den Kontakt mit dem jeweiligen Abschnitt des Werkstücks auf. Die Sensoreinrichtung ihrerseits weist ein Paar von Abstandsmesselementen auf, die unter einem bekannten Abstand voneinander beabstandet sind und in einer Ebene des zu messenden Winkels liegen, wobei die Messelemente mit zwei unterschiedlichen Punkten mit dem bewegbaren Fühler verbunden sind. So sind ein Paar dieser Fühler und die verbundenen Messelemente innerhalb des Grundkörpers angeordnet, an welchem das Werkstück während dessen Herstellung abgestützt ist.

Weitere Biegewinkelmessungen wurden bislang mittels digitaler Bildverarbeitung, Abstandssensoren, Lichtschnittsensoren, Messstiften, Messgabeln, drehbaren Gesenkelementen, Tast scheiben oder dergleichen realisiert und sind etwa aus der gattungsbildenden JP 2001 330403 A, aus der JP 2001 121216 A oder aus der EP 1 319 450 A1 bekannt.

Diese Messvorrichtungen sind zum größten Teil kompliziert aufgebaut und weisen eine nicht unerhebliche Störungsanfälligkeit auf.

Die Aufgabe der Erfindung besteht darin, eine für den Bediener einfach zu bedienende und vor allem genau messende Winkelmessvorrichtung für aus Blechen zu fertigende Werkstücke bereit zu stellen.

Diese Aufgabe der Erfindung wird durch die Merkmale des Anspruches 1 gelöst. Der sich durch die Merkmale des Anspruches 1 ergebende Vorteil liegt darin, dass so direkt an zumindest einem der Schenkel des Werkstücks die Neigungsmessung erfolgt, wobei hier die tatsächliche winkelige Lage des jeweiligen Schenkels bezüglich der innerhalb des Neigungssensors selbst enthaltenen, vorzugsweise lotrechten oder horizontalen Referenzebene ermittelt werden kann und basierend auf diesem Messwert eine möglichst gute Annäherung an einen vorgegebenen Biegewinkel zu ermöglichen. Der Neigungssensor als elektrisches Sensorelement liefert dabei ein weiterverarbeitbares, insbesondere elektrisches Messsignal, das mittels einer Steuerungsvorrichtung ausgewertet werden kann, die insbesondere auch durch die Steuerung der Biegepresse gebildet sein kann. Ein mikroelektronischer Aufbau des Neigungssensors ermöglicht trotz sehr kleiner Außenabmessungen von wenigen Millimetern beispielsweise eine Winkelmessauflösung von etwa 0,001° und eine Wiederholgenauigkeit von etwa 0,01°, was für Zwecke der Biegegenauigkeit leicht ausreichend ist. Derartige Messgenauigkeiten sind mit den bekannten Winkelmesseinrichtungen bisher nicht oder nur mit sehr aufwändigen Ausführungsformen möglich.

Bei einer erfindungsgemäßen Fertigungseinrichtung kann die entsprechende Winkellage rasch und sicher ermittelt werden, wobei der ermittelte Winkel in Abhängigkeit vom Zeitpunkt der Messdurchführung auf unterschiedliche Weise verwendet werden kann. Dazu wird der Neigungssensor zum Zeitpunkt der gewünschten Winkelermittlung manuell oder automatisiert am Werkstück angelegt und kann gegebenenfalls auch während der Biegeumformung anliegend am Schenkel gehalten sein. Durch eine entsprechende Lagerung des Neigungssensors in der Winkelerfassungsvorrichtung kann eine sichere und einfache Ermittlung des Neigungswinkels und darauf basierend auch des Biegewinkels durchgeführt werden. Durch die flächige Anlage des Neigungssensors mit seiner Bezugsfläche an einem Oberflächenabschnitt des Blechs können so geringe Oberflächenungenauigkeiten und damit einhergehende Messfehler besser ausgeglichen werden. Damit fallen aber auch neben der Fertigungsanlage zusätzlich aufzubauende, zumeist umfangreichere Messvorrichtungen weg, wie diese bei optischen Messanlagen benötigt werden. Damit kann aber auch der Störungseinfluss von Werkzeugen oder dgl. vermindert werden, wie dieser bei herkömmlichen Messverfahren oftmals aufgetreten ist.

Der Winkel zwischen zwei Schenkeln eines Werkstücks der sich nach einem teilweise durchgeführten oder abgeschlossenen Biegevorgang ergibt, kann durch eine einzige Messung ermittelt werden, z.B. indem ein Schenkel an eine Ebene mit bekannter Winkellage angelegt wird, z.B. eine horizontale Auflagefläche, und danach die Winkellage des zweiten Schenkels mittels des Neigungssensors gemessen wird. Alternativ dazu können auch die Winkellagen beider Schenkel jeweils mittels eines Neigungssensors gemessen werden, wobei keine Anlagefläche vorhanden sein muss.

Die Winkelmessung kann dabei während eines Biegevorganges zu bestimmten Zeitpunkten oder auch fortlaufend gemessen werden, also solange noch Umformkräfte auf das Werkstück einwirken oder aber auch in einem entlasteten Zustand des Werkstücks, wodurch ein tatsächlich erzielter Biegewinkel mit Berücksichtigung der elastischen Rückfederung ermittelt werden kann.

Die Messung kann z.B. auch bei einer Unterbrechung des Biegevorganges erfolgen, wobei ein aufgrund der Werkstückeigenschaften und den verwendeten Einstellwerten der Biegepresse erwarteter Soll-Biegewinkel mit dem gemessenen tatsächlichen Biegewinkel verglichen wird und basierend auf festgestellten Abweichungen des Umformverhaltens der restliche Biegevorgang mit korrigierten Einstellwerten durchgeführt werden kann. Dadurch können z.B. trotz Schwankungen der Materialeigenschaften wie Blechdicke, Steckgrenze usw. gleichbleibend genaue Biegeergebnisse erzielt werden.

Selbstverständlich kann die Winkelmessung auch nach Abschluss eines Biegevorganges durchgeführt werden, wodurch z.B. das Umformverhalten einer Materialcharge für mehrere gleichartige Werkstücke an einem Probewerkstück ermittelt wird und basierend darauf die Biegeparameter der Biegepresse angepasst werden.

Die Winkelmessvorrichtung der Fertigungsanlage kann sogar dazu eingesetzt werden, Werkstücke, die auf einer anderen Biegepresse gebogen wurden, zu vermessen oder z.B. Korrekturbiegungen in der Fertigungsanlage durchzuführen. Vorteilhaft ist auch eine weitere Ausführungsform nach Anspruch 2, da so bereits mit einem relativ geringen Aufwand beim Sensor eine ausreichende Messgenauigkeit erzielt werden kann. Es ist allerdings dabei auf eine exakte Ausrichtung des Sensors mit seiner Messrichtung bezüglich der Biegelinie des aus dem Blech zu fertigenden Werkstücks zu achten.

Vorteilhaft ist weiters eine Ausbildung nach Anspruch 3, da so an die Bedienung und vor allem an die Anordnung des Neigungssensors am Oberflächenabschnitt des Blechs bezüglich der Messrichtung keine so hohe Anforderung in Bezug auf deren Ausrichtung erfolgen muss. Dies wird durch die zweiachsige Winkelermittlung des Neigungssensors ermöglicht. Verdrehungen des anliegenden Neigungssensors innerhalb der Bezugsfläche können dadurch rechnerisch eliminiert werden

Vorteilhaft ist auch eine Weiterbildung nach Anspruch 4, da so die Messvorrichtung, insbesondere die daraus gebildete Winkelerfassungsvorrichtung, mehrere unterschiedliche Sensoren umfassen kann, von welchen jeder der einzelnen Sensoren einen unterschiedlichen Teilmessbereich des gesamt möglichen Messbereichs abdeckt. Damit kann durch die Aufteilung des Gesamtmessbereiches in einzelne Teilmessbereiche die Messgenauigkeit erhöht werden. Vor allem dann, wenn sich die einzelnen unmittelbar hintereinander vorgesehenen Teilmessbereiche einander überlappen. Die einzelnen Sensoren können dadurch jeweils im Bereich ihrer höchsten Messgenauigkeit eingesetzt werden.

Der Neigungssensor kann bereits vor Beginn des Biegevorganges an den zu messenden Schenkel angelegt werden, wodurch der Biegevorgang von Beginn an durch eine Messwertermittlung überwacht werden kann. Weiters kann damit ein exakter Differenzwinkel zwischen der Ausgangslage und der Endlage ermittelt werden.

Nach einer anderen Ausführungsvariante ist es möglich, durch eine Messung nach Beendigung des Biegevorganges auch eine Nachkontrolle des Biegeergebnisses durchführen zu können. Damit kann nach Wegnahme der formgebenden Druckkraft des Biegewerkzeugs und der gegebenenfalls damit einhergehenden Rückfederung der Schenkel gleich eine entsprechende Korrektur ohne zusätzlichem Handhabungsaufwand am Werkstück durchgeführt werden. Damit wird es möglich, beispielsweise auf wechselnde Werkstoffqualitäten rascher reagieren zu können, da so stets bei jedem der Werkstücke eine exakte Kontrolle des Biegewinkels möglich wird.

Die Winkelerfassungsvorrichtung mit dem Neigungssensor kann unmittelbar neben dem Biegewerkzeug der Biegepresse angeordnet sein, wodurch eine direkte, begleitende Messung eines von der Biegepresse ausgeführten Biegevorgangs möglich ist.

Es ist jedoch auch möglich, die Winkelerfassungsvorrichtung von den Biegewerkzeugen distanziert anzuordnen, wodurch zwar zur Durchführung von Winkelmessungen ein Werkstücktransfer innerhalb der Fertigungsanlage nötig ist, dafür kann jedoch während der Biegebearbeitung eines Werkstücks in der Biegepresse ein anderes Werkstück vermessen werden.

Vorteilhaft ist weiters auch noch eine Ausbildung, wodurch die Gefahr einer Verletzung der Bedienperson noch weiter verringert werden kann, da eine manuelle Positionierung des Neigungssensors entfällt. Durch die bedarfsweise ortsfeste Halterung direkt am zu verformenden Blech kann so auch noch auf komplizierte zusätzliche Anlagenteile verzichtet werden. Darüber hinaus kann so die Messgenauigkeit auch noch verbessert werden.

Vorteilhaft ist auch eine Weiterbildung, wodurch mit unterschiedlichsten Mitteln eine exakte, anliegende Halterung des Neigungssensors am Flächenabschnitt des Schenkels möglich wird. Damit kann je nach gewähltem Haltemittel auf den jeweiligen zu verarbeitenden Werkstoff des Blechs oder aber auch auf die Oberflächenbeschaffenheit Bedacht genommen werden.

Nach einer anderen Ausführungsvariante gemäß Anspruch 5 wird es möglich, so den Anlegevorgang des Sensors bei jedem Biegevorgang zu vereinfachen, da der Neigungssensor unmittelbar benachbart zur Arbeitsebene, jedoch in Richtung der Tiefe dazu distanziert angeordnet ist. Damit kann ebenfalls ein einwandfreier Messvorgang durchgeführt werden, ohne dass zusätzliche Handgriffe notwendig sind. Damit kann Montagezeit eingespart und weiters auch noch die Bediensicherheit erhöht werden.

Bei der Ausgestaltung nach Anspruch 6 ist von Vorteil, dass so eine noch exaktere Ermittlung des zwischen den Schenkeln eingeschlossenen Biegewinkels ermöglicht wird. Dies deshalb, da an beiden Schenkeln die exakte, winkelige Lage ermittelt werden kann und so der tatsächliche Biegewinkel sehr genau berechnet bzw. bestimmt werden kann.

Durch eine Ausführung nach Anspruch 7 können die Vorteile der unterschiedlichen Sensorarten kombiniert werden und aufgrund der hohen Messgeschwindigkeit des Drehratensensors auch eine Messung während des Biegevorganges erfolgen, insbesondere auch eine fortlaufende Überwachung des aktuellen Biegewinkels. Der Drehratensensor misst nicht direkt den Neigungswinkel sondern die Winkelgeschwindigkeit mit der sich die Neigung des Drehratensensors verändert. Durch mathematische Integration der innerhalb eines betrachteten Ablaufs gemessenen Winkelgeschwindigkeiten kann die Veränderung des Neigungswinkels errechnet werden. Um einen korrekten Absolutwert des Neigungswinkels zu erhalten wird die Integrationskonstante aus einer bekannten Ausgangsstellung oder den Messwerten des Neigungssensors ermittelt.

Die Verwendung eines Temperatursensors gemäß Anspruch 8 ermöglicht eine Steigerung der Messgenauigkeit, da dadurch das Messergebnis beeinflussende Temperaturänderungen kompensiert werden können.

Durch die Ausbildung nach Anspruch 8 ist es möglich, eine Winkelerfassungsvorrichtung zu schaffen, die mit hoher Präzision und Zuverlässigkeit und geringstem Platzbedarf sehr exakte Messwerte liefert. Abmessungen eines etwa quadratischen Neigungssensors mit unter 10 mm Kantenlänge sind dabei möglich.
Die Aufgabe der Erfindung wird aber unabhängig davon auch durch ein Verfahren zur Ermittlung einer Winkelstellung von zumindest einem durch den Biegevorgang gebildeten Schenkels bezüglich einer Referenzebene gemäß den im Anspruch 9 angegebenen Merkmalen gelöst. Die sich aus der Merkmalskombination des Kennzeichenteils dieses Anspruches ergebenden Vorteile liegen darin, dass so direkt an zumindest einem der Schenkel des Werkstücks die Neigungsmessung erfolgt, wobei hier die tatsächliche winkelige Lage des jeweiligen Schenkels bezüglich der vorgesehenen Referenzebene ermittelt werden kann. Damit kann so zumindest bei der Beendigung des Biegevorganges stets die entsprechende Winkellage rasch und sicher ermittelt werden, da der Neigungssensor zum Zeitpunkt der gewünschten Winkelermittlung am Werkstück anliegend daran angeordnet und gegebenenfalls auch feststehend gehalten ist und so eine sichere und einfache Ermittlung durchgeführt werden kann. Damit lässt sich in weiterer Folge der Biegevorgang, insbesondere die gegenseitige Verstellung der Biegewerkzeuge automatisieren, da stets eine sichere Messwertermittlung im unmittelbaren Nahbereich der Biegelinie jedoch in sicherem Abstand davon durchführbar ist. Durch die flächige Anlage des Neigungssensors mit seiner Bezugsfläche an einem Oberflächenabschnitt des Blechs können so geringe Oberflächenungenauigkeiten und damit einhergehende Messfehler besser ausgeglichen werden. Damit fallen aber auch neben der Fertigungsanlage zusätzlich aufzubauende, zumeist umfangreichere Messvorrichtungen weg, wie diese bei optischen Messanlagen benötigt werden. Damit kann aber auch der Störungseinfluss von Werkzeugen oder dgl. vermindert werden, wie dieser bei herkömmlichen Messverfahren oftmals aufgetreten ist.

Weiters ist ein Vorgehen gemäß den im Anspruch 10 angegebenen Merkmalen vorteilhaft, weil so bereits mit einem relativ geringen Aufwand beim Sensor eine ausreichende Messgenauigkeit erzielt werden kann. Es ist allerdings dabei auf eine exakte Ausrichtung des Sensors mit seiner Messrichtung bezüglich der Biegelinie des aus dem Blech zu fertigenden Werkstücks zu achten.

Eine weitere vorteilhafte Vorgehensweise ist im Anspruch 11 beschrieben, wodurch an die Bedienung und vor allem an die Anordnung des Neigungssensors am Oberflächenabschnitt des Blechs bezüglich der Messrichtung keine so hohe Anforderung in Bezug auf deren Ausrichtung erfolgen muss. Dies wird durch die zweiachsige Winkelermittlung des Neigungssensors ermöglicht.

Vorteilhaft ist auch eine Verfahrensvariante wodurch möglich ist, einen Neigungssensor zu schaffen, der mit hoher Präzision und Zuverlässigkeit und geringstem Platzbedarf sehr exakte Messwerte liefert.

Vorteilhaft ist auch eine Vorgehensweise nach Anspruch 12, da so bereit ab dem Beginn des Biegevorganges eine Messwertermittlung durchgeführt und eine Überwachung des Biegevorgangs erfolgen werden kann. Dadurch kann so ein exakter Differenzwinkel zwischen der Ausgangslage und der Endlage ermittelt werden.

Eine andere vorteilhafte Vorgehensweise ist im Anspruch 13 beschrieben, da so die Gefahr einer Verletzung der Bedienperson noch weiter verringert werden kann. Durch die bedarfsweise ortsfeste Halterung direkt am zu verformenden Blech kann so auch noch auf komplizierte zusätzliche Anlagenteile verzichtet werden. Darüber hinaus kann so die Messgenauigkeit auch noch verbessert werden.

Weiters ist ein Vorgehen vorteilhaft, bei welchem zusätzlich noch auch Fehler in der Aufstellung der Maschine bzw. der Ausrichtung des Blechs vor der Durchführung des Biegevorgangs ermittelt und entsprechend bei der weiteren Berechnung bzw. Erhebung des Biegewinkels mitberücksichtigt werden können.

Durch eine weitere vorteilhafte Vorgehensweise kann auch eine Nachkontrolle des Biegeergebnisses durchgeführt werden. Damit kann nach Wegnahme der formgebenden Druckkraft des Biegewerkzeugs und der gegebenenfalls damit einhergehenden Rückfederung der Schenkel gleich eine entsprechende Korrektur ohne zusätzlichem Hantierungsaufwand am Werkstück durchgeführt werden kann. Damit wird es möglich, beispielsweise auf wechselnde Werkstoffqualitäten rascher reagieren zu können, da so stets bei jedem der herzustellenden Werkstücke eine exakte Kontrolle des Biegewinkels möglich wird.

Schließlich ist aber auch eine Verfahrensvariante gemäß Anspruch 14 vorteilhaft, weil so eine noch exaktere Ermittlung des zwischen den Schenkeln eingeschlossenen Biegewinkels ermöglicht wird. Dies deshalb, da an beiden Schenkeln die exakte, winkelige Lage ermittelt werden kann und so der tatsächliche Biegewinkel sehr genau berechnet bzw. bestimmt werden kann.

Eine Verfahrensdurchführung gemäß Anspruch 15 ermöglicht aufgrund der hohen Messdynamik eines Drehratensensors eine sehr hohe Messfrequenz und dadurch auch eine Messung während des Biegevorganges bei bewegten Biegeschenkeln.

Eine Verknüpfung der Messwerte von Drehratensensor und Neigungssensor unter Anwendung eines Kalman-Filters steigert die Zuverlässigkeit der Messergebnisse, da dadurch die Auswirkungen zufälliger Messfehler reduziert werden.

Eine Steigerung der Messzuverlässigkeit kann weiters durch eine Temperaturkompensation erzielt werden.

Zum besseren Verständnis der Erfindung wird diese anhand der nachfolgenden Figuren näher erläutert.

Es zeigen jeweils in stark schematisch vereinfachter Darstellung:
- Fig. 1: eine Fertigungsanlage mit einem durch eine Biegepresse verformten Werkstück und einem an einem Schenkel angeordneten Neigungssensor einer Messanordnung, in Ansicht;
- Fig. 2: die Anlage nach Fig. 1, in Seitenansicht;
- Fig. 3: eine vergrößerte Detailansicht des Werkstücks nach Fig. 2 im Biegewerkzeug;
- Fig. 4: eine schaubildliche Darstellung eines an einem Schenkel angeordneten Neigungssensors der Messanordnung;
- Fig. 5: einen Teilbereich der Fertigungsanlage mit einer anderen Anordnungs- und Haltemöglichkeit von Neigungssensoren, vor dem Beginn des Biegevorgangs, in Seitenansicht;
- Fig. 6: den Teilbereich nach Fig. 5, während des Biege- und Messvorganges, in Seitenansicht;
- Fig. 7: ein Schema der Verknüpfung von Messwerten eines Drehratensensors mit Messwerten eines Neigungssensors;
- Fig. 8: ein Schema einer alternativen Verknüpfung von Messwerten eines Drehratensensors mit Messwerten eines Neigungssensors.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

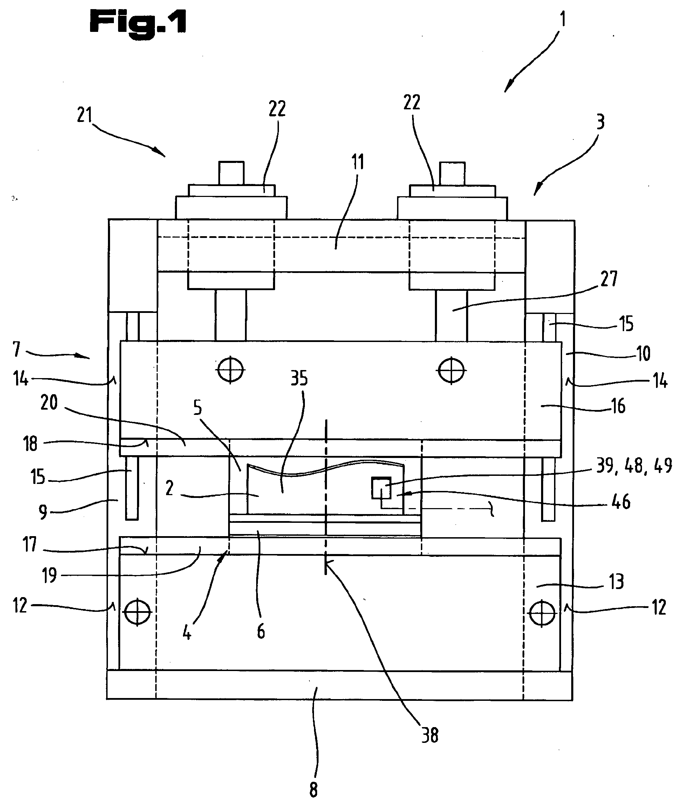

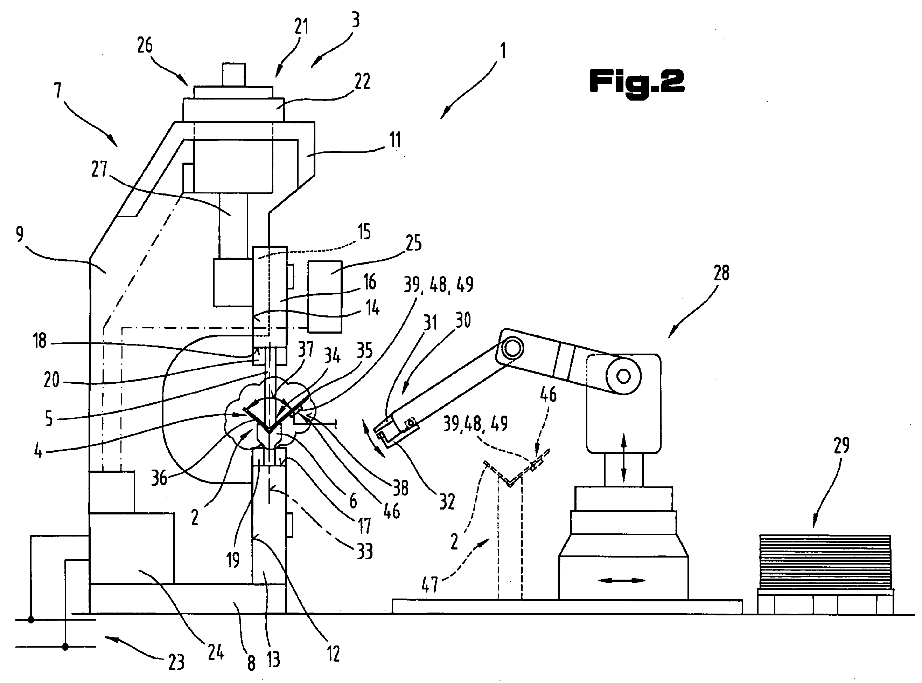

In den Fig. 1 und 2 ist eine Fertigungsanlage 1 in stark schematisch vereinfachter Darstellung gezeigt, welche im vorliegenden Fall für das Freibiegen von aus Blech zu fertigenden Werkstücken 2 mittels Gesenkbiegen ausgebildet ist. Es wäre aber auch möglich, in der Fertigungsanlage 1 zur Durchführung des Biegevorganges eine Schwenkbiegemaschine einzusetzen.

Die im vorliegenden Fall für das Biegen eingesetzte Fertigungsanlage 1 umfasst eine Biegepresse 3, insbesondere eine Abkantpresse oder Gesenkbiegepresse, zur Herstellung der Werkstücke 2 bzw. Werkteile zwischen relativ zueinander verstellbaren Biegewerkzeugen 4, wie Biegestempel 5 und Biegegesenk 6.

Ein Maschinengestell 7 der Biegepresse 3 besteht beispielsweise aus einer Bodenplatte 8 auf der vertikal aufragend, zueinander beabstandet und parallel zueinander ausgerichtete Seitenwangen 9, 10 angeordnet sind. Diese sind bevorzugt durch einen massiven, beispielsweise aus einem Blechformteil gebildeten Querverband 11 an ihren von der Bodenplatte 8 distanzierten Endbereichen miteinander verbunden.

Die Seitenwangen 9, 10 sind zur Bildung eines Freiraums für das Umformen des Werkstücks 2 etwa C - förmig, wobei an Frontstirnflächen 12 von bodennahen Schenkeln der Seitenwangen 9, 10 ein feststehender, insbesondere auf der Bodenplatte 8 aufstehender Pressbalken 13 befestigt ist. Dieser ortsfest angeordnete und feststehende Pressbalken 13 kann auch als Presstisch bezeichnet werden, an dem Teile des Biegewerkzeugs 4 angeordnet und auch gehalten sind. An Frontstirnflächen 14 von von der Bodenplatte 8 entfernten Schenkel ist in Linearführungen 15 ein zu dem den Tischbalken bildenden Pressbalken 13 relativ verstellbarer weiterer Pressbalken 16, insbesondere ein Druckbalken, geführt gelagert. Auf einander gegenüberliegenden, parallel zueinander verlaufenden Stirnflächen 17, 18 der beiden Pressbalken 13, 16 sind Werkzeugaufnahmen 19, 20 zur Bestückung mit den Biegewerkzeugen 4 angeordnet. Das oder die Biegewerkzeuge 4 können auch unter Zwischenschaltung eines nicht näher dargestellten Adapters an den Werkzeugaufnahmen 19, 20 gehaltert sein.

Die gezeigte Biegepresse 3 weist als Antriebsanordnung 21 für den verstellbaren Pressbalken 16, nämlich den Druckbalken, z.B. zwei mit elektrischer Energie betriebene Antriebsmittel 22 auf, die mit einer aus einem Energienetz 23 angespeisten Steuerungsvorrichtung 24 leitungsverbunden sind. Über ein mit der Steuerungsvorrichtung 24 leitungsverbundenes Eingabeterminal 25 wird beispielsweise der Betrieb der Biegepresse 3 gesteuert.

Bei den Antriebsmitteln 22 handelt es sich bevorzugt um elektromotorisch betriebene Spindeltriebe 26, wie sie allgemein bekannt sind, von denen Stellmittel 27 für eine reversible Stellbewegung des durch den Druckbalken gebildeten oberen Pressbalkens 16 mit diesem, zum Beispiel antriebsverbunden sind.

Auf weitere für den Betrieb einer derartigen Biegepresse 3 erforderliche Details, wie beispielsweise Sicherheitseinrichtungen, Anschlagsanordnungen und Kontrollvorrichtungen wird in der gegenständlichen Beschreibung zur Vermeidung einer unnötigen Länge der Beschreibung verzichtet.

Weiters kann die Fertigungsanlage 1 auch noch einen hier vereinfacht in der Fig. 2 dargestellten Manipulator 28 umfassen, welcher von einem schematisch angedeuteten Vorratsstapel 29 von zu verformenden bzw. abzukantenden Blechen zumindest ein Stück davon entnimmt und in den Arbeitsbereich der Biegepresse 3 verbringt. Der Manipulator 28 umfasst seinerseits eine vereinfacht dargestellte Greifzange 30, die ihrerseits Greiffinger 31, 32 aufweist. Die Greiffinger 31, 32 weisen jeweils an der dem zu fertigenden Werkstück 2 zugewendeten Seite Klemmflächen auf. Durch eine entsprechende Verschwenkung der beiden Greiffinger 31, 32 gegeneinander und Aufbringen einer ausreichenden Klemmkraft, wird über das Zusammenwirken der Klemmflächen das Blech bzw. das zu fertigende Werkstück 2 vom Manipulator 28 gehalten und entsprechend bewegt sowie positioniert. Mit den Greiffingern 31, 32 der Greifzange 30 ist ein entsprechendes Greifen und in späterer Folge bedingt durch die Klemmbewegung ein ausreichender Halt für das aus dem Blech zu fertigenden Werkstück 2 gewährleistet.

Weiters ist hier noch vereinfacht dargestellt, dass die beiden Pressbalken 13, 16, insbesondere deren Werkzeugaufnahmen 19, 20, bzw. das daran gehaltene Biegewerkzeug 4 mit seinem
Biegestempel 5 und Biegegesenk 6, bei einer Betrachtung in Längsrichtung der Pressbalken 13, 16 eine sich dazwischen erstreckende Arbeitsebene 33 definieren. Die Arbeitsebene 33 verläuft bevorzugt mittig bezüglich der Pressbalken 13, 16 bzw. den an diesen angeordneten Werkzeugaufnahmen 19, 20. Im vorliegenden Ausführungsbeispiel wird hier eine vertikal ausgerichtete Ebene verstanden, in welcher auch ein durch das Biegewerkzeug 4 definierter Biegebereich 34 angeordnet bzw. ausgebildet ist. Unter Biegebereich 34 wird dabei jener Bereich verstanden, welcher dazu dient, aus dem zumeist ebenflächig vorliegenden noch unverformten Blech das zu fertigende Werkstück 2 zu bilden bzw. ein bereits vorverformtes Werkstück 2 weiter zu bearbeiten, indem zumindest ein zusätzlicher Biegebereich 34 ausgebildet wird.

Der Biegebereich 34 liegt dabei zumeist in der Arbeitsebene 33 und wird durch die zusammenwirkenden Bauteile des Biegewerkzeugs 4, nämlich den Biegestempel 5 und das Biegegesenk 6, gebildet bzw. definiert. Der Biegebereich 34 bildet am herzustellenden Werkstück 2 zumeist eine bevorzugt geradlinig verlaufende Biegelinie aus, wobei sich beidseits dieser jeweils Schenkel 35, 36 durch den durchgeführten Biegevorgang ausbilden. Je nach gewünschter bzw. herzustellender Geometrie des Werkstücks 2 schließen die beiden Schenkel 35, 36 zwischen sich einen Biegewinkel 37 ein. Dieser Biegewinkel 37 wird in einer senkrecht bezüglich der Biegelinie ausgerichteten Bezugsebene 38 gemessen, welche in beiden Fig. 1 und 2 angedeutet ist. Die Bezugsebene 38 ihrerseits ist weiters bevorzugt auch noch bezüglich der Arbeitsebene 33 dazu in senkrechter Richtung verlaufend ausgerichtet.

Weiters ist in der Fig. 2 bei jenem Schenkel 35 des zu fertigenden Werkstücks 2, welcher hier dem Bedienbereich der Biegepresse 3 bzw. dem Manipulator 28 zugewendet ist, stark vereinfacht eine Winkelerfassungsvorrichtung 50 dargestellt, welche einen Neigungssensor 39 umfasst und diesen zur Durchführung von Messungen beweglich lagert. Der Neigungssensor 39 verwendet zur Messung von Winkeländerungen mit seiner eingebauten Sensorik die Richtung der Schwerkraft als Referenzrichtung und kann insbesondere Winkellagen in Bezug auf eine vertikale oder horizontale Referenzrichtung feststellen und als weiterverarbeitbare Messgröße bereitstellen. Der Neigungssensor 39 als elektrisches Messelement kann seinerseits mit der Steuerungsvorrichtung 24 und/oder dem Eingabeterminal 25 verbunden sein. Unter verbunden wird hier nicht nur eine Leitungsverbindung durch nicht näher dargestellte Kabel sondern auch eine drahtlose Verbindung wie z.B. eine Funkverbindung oder ähnliches verstanden. Es kann diese Verbindung aber auch mit einer nicht näher dargestellten Auswerteeinheit und/oder einer Rechnereinheit erfolgen, welche den oder die vom Neigungssensor 39 ermittelten Messwerte erfasst, gegebenenfalls eine Umrechnung bzw. eine Ermittlung eines Winkelwertes durchführt und damit die weitere Bewegung der Biegepresse 3 mit ihren Biegewerkzeugen 4 gesteuert werden kann, damit der vorgegebene Biegewinkel 37 am Werkstück 2 hergestellt werden kann.

Wie in Fig. 2 mit strichlierten Linien angedeutet, kann die Winkelerfassungsvorrichtung 46 auch distanziert vom Biegewerkzeug 4 angeordnet sein, z.B. in Form einer eigenen Messstation 47 innerhalb der Fertigungsanlage 1.

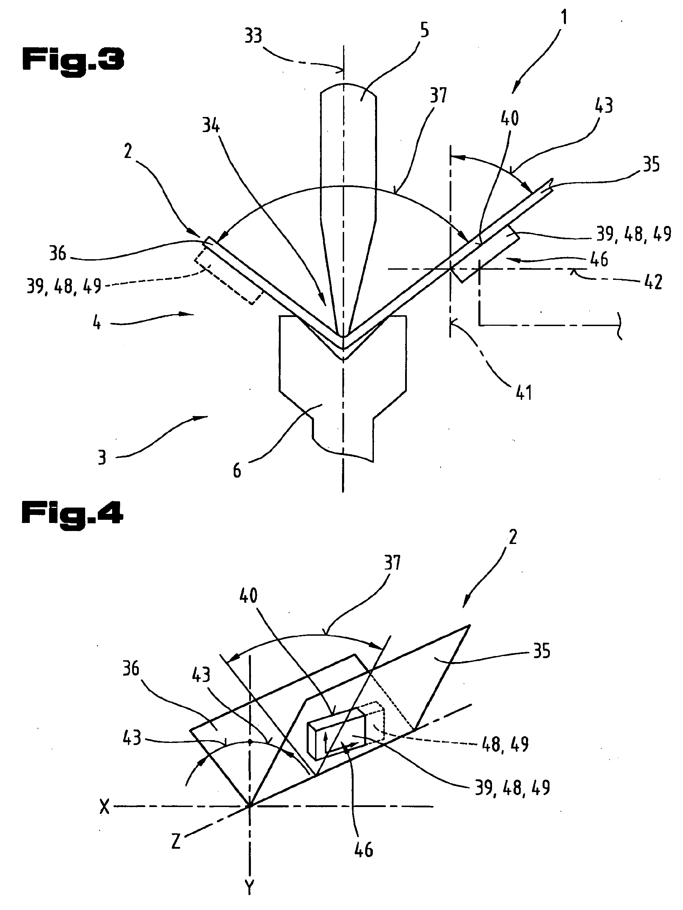

In der Fig. 3 ist ein Detail des Werkstücks 2 gemäß der Fig. 1 und 2 gezeigt, wobei bei dieser Darstellung ein größerer Maßstab gewählt wurde. Das Biegewerkzeug 4 ist hier durch den Biegestempel 5 sowie das Biegegesenk 6 gebildet. Mit dem hier dargestellten Biegestempel 5 erfolgt der bevorzugt durchgeführte Freibiegevorgang, wobei die Arbeitsebene 33 mittig bezüglich des Biegewerkzeugs 4 verlaufend dargestellt ist. Das vereinfacht dargestellte Werkstück 2 weist beidseits der Arbeitsebene 33 seine beiden Schenkel 35, 36 auf. Im vorliegenden Fall wird durch die symmetrische Anordnung der nicht näher bezeichneten Biegegesenkflächen des Biegegesenks 6 eine symmetrische Verformung der beiden Schenkel 35, 36 bezüglich der Arbeitsebene 33 erfolgen. Die beiden Schenkel 35, 36 schließen zwischen sich den Biegewinkel 37 ein.

Wie ebenfalls bereits in der Fig. 2 schematisch angedeutet, ist zumindest an einem der Schenkel 35, 36 des Werkstücks 2 der Neigungssensor 39 anliegend daran angeordnet und auch an dieser bevorzugt feststehend gehaltert. Der Neigungssensor 39 weist eine Bezugsfläche 40 auf. Diese Bezugsfläche 40 stellt eine Art Basisfläche des Neigungssensors 39 dar, welche zum Anlegen an einen Flächenabschnitt der Oberfläche des Blechs bzw. des aus diesem herzustellenden Werkstücks 2 dient. Es wäre aber auch noch möglich, zwischen dem Neigungssensor 39 und dem Oberflächenabschnitt des Blechs bzw. Werkstücks 2 eine zusätzliche, jedoch nicht näher dargestellte Haltevorrichtung vorzusehen. Diese liegt einerseits am Oberflächenabschnitt des Blechs an und ist dort auch gehalten und trägt andererseits den Neigungssensor 39. Die Haltevorrichtung wäre mit planparallel zueinander ausgerichteten Flächen auszubilden, um einen Winkelfehler in der Messung auszuschließen bzw. einen eigenen Justier- bzw. Eichvorgang zu vermeiden.

Dabei wird das zumeist ebenflächige Blechstück bzw. aber auch ein bereits vorgekantetes bzw. gebogenes Werkstück 2 zur weiteren Bearbeitung zwischen die Biegewerkzeuge 4 verbracht, um so den weiteren Biegevorgang durchführen zu können. Ist das zu bearbeitende Blech bzw. das Werkstück 2 zwischen den noch voneinander getrennten Biegewerkzeugen 4 positioniert, kann bereits ab diesem Zeitpunkt der Neigungssensor 39 an zumindest einem der Schenkel 35, 36 angeordnet werden. Der Neigungssensor 39 während des Biegevorganges oder aber auch erst nach der Beendigung des Biegevorganges an zumindest einem der Schenkel 35, 36 angelegt werden und der Messvorgang durchgeführt werden. Wird der Neigungssensor 39 bereits vor dem Beginn des Biegevorganges an zumindest einem der Schenkel 35, 36 angelegt, kann dieser zumindest ab oder bereits vor dem Beginn sowie während des gesamten Biegevorganges an diesem Flächenabschnitt anliegend an diesem angeordnet sein. Dies bedeutet für den zuletzt beschriebenen Fall, dass der Neigungssensor 39 die Lageänderung des auszubildenden Schenkels 35, 36 mitmacht und ausgehend von der unverformten Ausgangslage bis zum Erreichen des Biegeendes an diesem Flächenabschnitt anliegend verbleibt. Dabei wird je nach Wahl und Ausbildung des Neigungssensors 39 ein Messwert ermittelt, um so die weitere Ermittlung der Winkelstellung zumindest eines durch den Biegevorgang gebildeten Schenkels 35, 36 bezüglich einer Referenzebene 41 und/oder 42 durchführen zu können. Bevorzugt wird eine ortsfeste, anliegende Halterung des Neigungssensors 39 am Oberflächenabschnitt des Blechs gewählt. So könnte es unabhängig davon auch noch möglich sein, den Neigungssensor 39 mittels einer schwenkbaren Hebelanordnung unter Aufbringung einer Federkraft an den Oberflächenabschnitt des Blechs anzudrücken.

Je nach Ausrichtung und Wirkungsweise des Neigungssensors 39 können die Referenzebenen 41, 42 zueinander eine unterschiedliche Lage bzw. Raumrichtung aufweisen. So kann beispielsweise die hier eingezeichnete Referenzebene 41 parallel bezüglich der Arbeitsebene 33 bzw. in dieser verlaufend ausgerichtet sein. Eine weitere Möglichkeit der Anordnung stellt beispielsweise eine Maschinenebene dar, welche durch die weitere, eingezeichnete Referenzebene 42 dargestellt ist. Befindet sich die Biegepresse 3 in einer total horizontalen Ausrichtung, insbesondere im Bereich ihrer Werkstück- bzw. Blechauflagefläche im Bereich des Biegewerkzeugs 4, kann diese Referenzebene 42 ebenfalls parallel zu dieser verlaufend ausgerichtet sein. Bei dieser Ausrichtung der Biegepresse 3 verläuft die weitere Referenzebene 42 in einem Winkel von 90° bezüglich der Arbeitsebene 33 sowie in horizontaler Ausrichtung.

Unabhängig bzw. zusätzlich dazu wäre es auch noch möglich, wie dies beispielsweise im Bereich des weiteren Schenkels 36 dargestellt ist, dass auch an diesem ein weiterer Neigungssensor 39 angeordnet sein kann, welcher hier in strichlierten Linien angedeutet ist. Auch dieser Neigungssensor 39 ist zur Durchführung der Messung anliegend, insbesondere ortsfest, an einem Flächenabschnitt des Blechs bzw. des herzustellenden Schenkels 35, 36 daran gehalten.

So kann es möglich sein, den Neigungssensor 39 beispielsweise durch einen einachsigen Neigungssensor auszubilden. Dabei ist jedoch darauf zu achten, dass dann eine Ausrichtung des Neigungssensors bzw. dessen Messrichtung genau zu erfolgen hat. Die Messrichtung des Sensors ist dann rechtwinkelig bezüglich der im Biegebereich 34 verlaufenden Biegelinie auszurichten. Diese Achsrichtung wird bei derartigen Pressen mit "z" bezeichnet.

Wird hingegen der Neigungssensor 39 durch einen zweiachsigen Neigungssensor gebildet, kann dieser eine Messebene aufspannen, welch beispielsweise durch zwei rechtwinkelig zueinander ausgerichtet Messrichtungen bzw. Messstrahlen definiert ist. Dabei ist diese von den beiden Messrichtungen bzw. Messachsen aufgespannte Messebene parallel zur Bezugsfläche 40 des Neigungssensors 39 ausgerichtet. Dann ist eine Auswertung von zwei Achsen zur Ermittlung der Winkelstellung möglich, wobei dann die Ausrichtung des Neigungssensors 39 bezüglich der Biegelinie nicht so exakt erfolgen muss, wie dies für den zuvor beschriebenen einachsigen Neigungssensor 39 von Notwendigkeit war. Es wäre aber noch möglich, einen mehrachsigen Neigungssensor zu verwenden, welcher Winkel bezüglich mehr als zwei Achsen ermitteln kann.

Bei vielen der Neigungssensoren erfolgt die Messung der Neigung von deren Bezugsfläche 40 bezüglich der Schwerkraft - also in einer lotrechten Ausrichtung. Damit wird es möglich einen Neigungswinkel 43, beispielsweise des Schenkels 35 bezüglich der lotrecht verlaufenden Basismessrichtung des Neigungssensors 39 bzw. der Winkelerfassungsvornchtung ermitteln zu können. Dies ist hinlänglich bekannt, wobei hier nicht näher auf die Wirkungsweise des Neigungssensors 39, insbesondere der Winkelerfassungsvorrichtung, eingegangen wird.

Als besonders vorteilhaft hat sich herausgestellt, wenn der Neigungssensor 39 beispielsweise auf der MEMS-Technologie basiert. Die Abkürzung MEMS bedeutet Micro-ElektroMechanisches System und zeichnen sich solche Neigungssensoren 39 durch kleine Abmessungen bis herunter zu wenigen Millimetern aus.

Es wäre auch noch möglich, dass der Bezugsfläche 40 mehrere unterschiedlich orientierte Neigungssensoren 39 zugeordnet sind, wodurch die Winkelerfassungsvorrichtung 46 einen Gesamtmessbereich zur Neigungsermittlung aufweist, und der Gesamtmessbereich in mehrere, insbesondere einander überlappende, Teilmessbereiche unterteilt ist. So kann der die Winkelerfassungsvorrichtung 46 bildende Neigungssensor 39 auch mehrere einzelne Sensoren umfassen, von welchen jeder der einzelnen Sensoren einen Teilmessbereich des gesamt möglichen Messbereichs abdeckt. Damit kann durch die Aufteilung des Gesamtmessbereiches in einzelne Teilmessbereiche die Messgenauigkeit erhöht werden. Vor allem dann, wenn sich die einzelnen unmittelbar hintereinander vorgesehenen Teilmessbereiche einander überlappen.

Der Neigungssensor 39 bzw. die die Winkelerfassungsvorrichtung bildenden Neigungssensoren 39 kann bzw. können an dem oder den Schenkeln 35, 36 auch noch nach Beendigung des Biegevorgangs so lange an den Flächenabschnitten anliegend daran und bevorzugt ortsfest gehalten verbleiben, bis dass die Rückfederung der Schenkel nach Wegfallen der aufgebrachten Biegekraft während des Biegevorgangs zumindest zum größten Teil erfolgt ist, um so den tatsächlichen Biegewinkel 37, welcher beispielsweise zwischen den Schenkeln 35, 36 eingeschlossen ist, exakt ermitteln zu können. Diese Ermittlung kann beispielsweise derart erfolgen, dass nach erfolgtem Biegevorgang das Biegewerkzeug 4 soweit geöffnet wird, dass die beiden Schenkel 35, 36 ohne Aufbringung einer Druckkraft bzw. Biegekraft zwischen dem Biegewerkzeug 4 gehalten werden und in dieser verformten Position dann zumindest an einem der Schenkel 35, 36 des zu fertigenden Werkstücks 2 der Neigungswinkel 43 ermittelt wird. Durch entsprechende Berechnung lässt sich dann beispielsweise bei Verwendung von zwei Neigungssensoren 39 der Biegewinkel 37 rechnerisch ermitteln.

Die an dem oder den Schenkeln 35, 36 angeordneten Neigungssensoren 39 können mit den unterschiedlichsten Haltemitteln an dem jeweiligen dafür vorgesehenen Flächenabschnitt des Blechs bzw. zu fertigten Werkstücks 2 anliegend daran, insbesondere feststehend und ortsfest, gehalten werden. Dabei können beispielsweise die Mittel zur Halterung des Neigungssensors 39 am Flächenabschnitt des Schenkels 35, 36 aus der Gruppe von magnetischer Halterung, ablösbarer Klebeverbindung, Unterdruckhalterung, Federkraftklemmung, mechanische Klemmung, federunterstützter Halter, manueller Halterung, Adhäsion ausgewählt sein. Damit ist eine sichere, anliegende Anordnung und Halterung des Neigungssensors 39 an dem jeweiligen Flächenabschnitt der Oberfläche des oder der Schenkel 35, 36 gewährleistet.

Ist beispielsweise die Maschinenebene bzw. die Arbeitsebene 33 nicht parallel und/oder rechtwinkelig zu einer der zuvor beschriebenen Referenzebenen 41, 42 verlaufend ausgerichtet, ist es notwendig, vor der Durchführung des Biegevorganges einen Referenziervorgang des Neigungssensors 39 bzw. der daraus gebildeten Winkelerfassungsvorrichtung durchzuführen. Damit wird es möglich, diese Abweichung von der Ideallage zu ermitteln und so eine entsprechende Korrekturberechnung des ermittelten Neigungswinkels 43 und in weiterer Folge des Biegewinkels 37 durchführen zu können. Im Zuge des Kalibriervorganges kann dann beispielsweise eine Schräglage des Blechs bzw. eines Schenkels 35, 36 bezüglich einer der Referenzebenen 41 und/oder 42 festgestellt werden und im Zuge des Kalibriervorganges ausgeglichen werden. So kann die jeweilige Messrichtung bzw. die Ausrichtung der winkeligen Lage der Bezugsfläche 40 des Neigungssensors 39 bezüglich der Referenzebene 41 und/oder 42 erhoben und damit die Abweichung von der theoretischen Nulllage ermittelt werden. Dieser Korrekturwert ist anschließend bei der weiteren Winkelermittlung mit zu berücksichtigen.

Durch die bevorzugt zumeist stetige Anordnung und Halterung des Neigungssensors 39, bereits ausgehend vor der Durchführung des Biegevorganges, kann so der Biegewinkel 37 sowohl während als auch nach Beendigung des Biegevorgangs und einer möglichen Rückfederung der Schenkel gemessen werden. Aufgrund der gemessenen Neigung der Bezugsfläche 40 des Neigungssensors 39 bezogen auf das Lot kann in weiterer Folge auf den Biegewinkel 37 zurückgeschlossen werden. Wird ein zuvor beschriebener, zweiachsiger Neigungssensor 39 verwendet, werden entsprechende Sensorwerte als Maß für die Neigung in die beiden Messrichtungen ermittelt. Dabei kann beispielsweise über die Umrechnung der Spannungswerte der Neigungssensoren 39 mittels Vektorgeometrie auf den jeweiligen Neigungswinkel 43 und in weiterer Folge auf den Biegewinkel 37 rückgeschlossen werden.

Die Winkelmessung mit dem Neigungssensor 39 könnte auch nur durch bloßes Andrücken durch eine Bedienperson erfolgen, wodurch so auf zusätzliche Haltevorrichtungen verzichtet werden kann.

In der Fig. 4 ist noch schaubildlich vereinfacht das Werkstück 2 mit seinen beiden Schenkeln 35, 36 gezeigt, wobei hier nur auf einem der Schenkel - nämlich dem Schenkel 35 - der Neigungssensor 39 angeordnet ist. Bei diesem hier gezeigten Neigungssensor 39 handelt es sich um einen zweiachsig ausgebildeten Neigungssensor, bei dem die beiden Messrichtungen bzw. Messachsen rechtwinkelig zueinander verlaufend ausgerichtet und vereinfacht dargestellt sind. Außerdem ist dabei noch gezeigt, dass eine leicht gedrehte Anordnung des Neigungssensors 39 mit ihren beiden durch Pfeile eingetragenen Messrichtungen in einer durch den Schenkel 35 gebildeten Ebene bezüglich der durch die Achse mit der Bezeichnung "z" eingetragen Richtung erfolgt ist. Dies spielt bei einem zweiachsigen Sensor keine so große Rolle. Bei einer noch unverformten, ebenen Ausgangslage des Bleches bzw. Schenkels 35, 36 ist die Ausrichtung des Neigungssensors 39 mit seinen Messrichtungen auf die mit dem Buchstaben "y" bezeichnete Achse bezogen. Dabei stellt diese Achse eine Vertikalachse dar, um welche der Neigungssensor 39 verdreht sein kann.

Der Neigungssensor 39 ist wiederum mit seiner Bezugsfläche 40 an einem Oberflächenabschnitt zumindest eines der Schenkeln 35, 36 angeordnet. Um den von den Schenkeln 35, 36 eingeschlossenen Biegewinkel 37 ermitteln zu können, ist auch noch eine weiterer, jedoch hier nicht näher dargestellter Neigungssensor 39 am weiteren Schenkel 36 des herzustellenden Werkstücks 2 anzuordnen. Die Messung erfolgt analog, wie dies bereits zuvor in der Fig. 3 detailliert beschrieben worden ist.

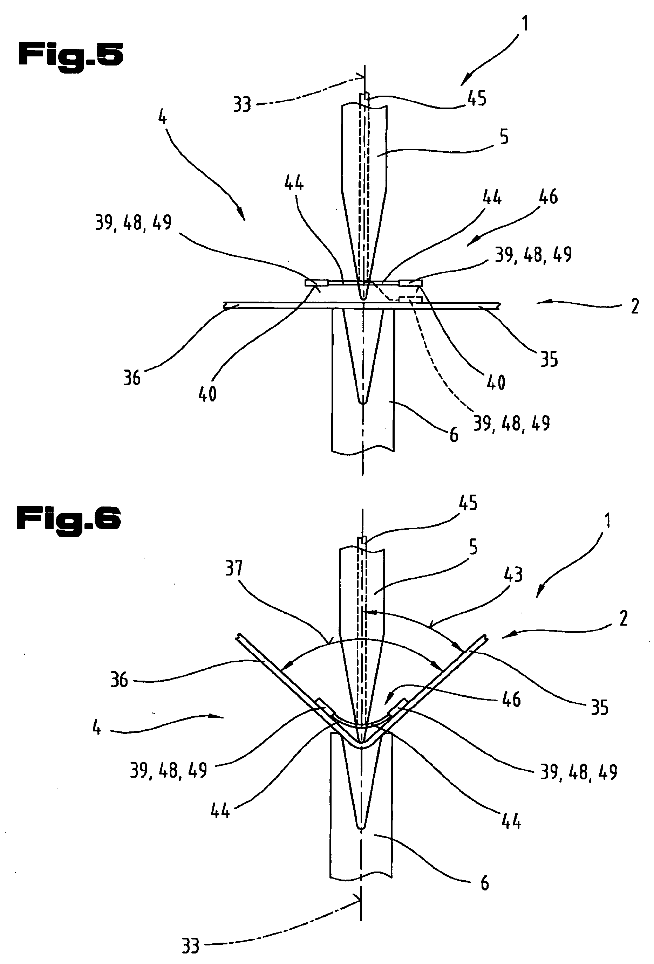

In den Fig. 5 und 6 ist eine weitere und gegebenenfalls für sich eigenständige Ausführungsform der Messanordnung von Neigungssensoren 39 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen. Dabei sei erwähnt, dass hier beidseits der Arbeitsebene 33 jeweils ein Neigungssensor 39 gezeigt ist, wobei es möglich ist, nur auf einer Seite der Arbeitsebene 33 einen Neigungssensor 33 vorzusehen. Um die Messgenauigkeit bei einer größeren Längserstreckung des herzustellenden Werkstücks 2 in Richtung des Biegewerkzeugs 4 zu erhöhen, könnten aber auf der gleichen Seite der Arbeitsebene 33 auch mehrere Neigungssensoren 39 vorgesehen sein. Der Neigungssensor 39 bzw. die Neigungssensoren 39 sind in dieser Ausführungsform mittels eines elastischen Trägerelements 44 gehalten, das z.B. durch eine Blattfeder aus Federstahl oder einem ähnlich dauerhaft elastischen Material gebildet ist.

Bei der Durchführung des Biegevorganges legen sich die Neigungssensoren 39 an den einander zugewendeten Oberflächen des Werkstücks 2 mit den herzustellenden Schenkeln 35, 36 an. Ab diesem Zeitpunkt wird von zumindest einem Neigungssensor 39 oder von beiden Neigungssensoren 39 der zuvor beschriebene Neigungswinkel 43 ermittelt und in weiterer Folge dann daraus der von den Schenkeln 35, 36 eingeschlossene Biegewinkel 37 errechnet. Der oder die Neigungssensoren 39 können dabei so ausgebildet sein, dass diese bereits eine Absolutmessung des Neigungswinkels 43 durchführen. In diesem Fall ist es dann nicht unbedingt zwingend erforderlich, dass der oder die Neigungssensoren 39 bereits ab oder vor dem Beginn des Biegevorgangs an dem Flächenabschnitt zumindest eines Schenkels 35, 36 des zu fertigenden Werkstücks 2 anliegend daran angeordnet und auch gehalten werden.

Um eine noch höhere Flexibilität der gesamten Messanordnung mit dem Neigungssensor 39 sowie dem Trägerelement 44 zu erzielen, kann es vorteilhaft sein, wenn das Trägerelement 44 austauschbar bzw. auswechselbar mit dem Biegewerkzeug 4, insbesondere dem Biegestempel 5 verbunden ist. Damit können auch unterschiedlich lang ausgebildete Trägerelemente 44 eingesetzt werden. Es wäre aber auch noch möglich, das Trägerelement 44 in Art einer in Fig. 5 strichliert angedeuteten, gekröpften Ausführung auszubilden, um so auch bereits ab dem Beginn des Biegevorgangs einen Messvorgang durchführen zu können. Dies ist jedoch nur bei Anlage des Neigungssensors 39 an dem vorgesehenen Flächenabschnitt des Werkstücks 2 möglich.

Der Biegevorgang und die damit einhergehende Ermittlung des Biegewinkels 37 kann derart erfolgen, dass mit dem Biegevorgang begonnen wird und anschließend durch Entlastung die Rückfederung der Schenkel 35, 36 ermöglicht wird. Anschließend an diesen Entlastungsvorgang wird der Messvorgang der Winkelstellung der Schenkel 35, 36 durchgeführt und gegebenenfalls ein weiterer Nachbiegevorgang durchgeführt, um den vorgegebenen Biegewinkle 37 exakt am Werkstück 2 ausbilden zu können. Nach der Entlastung des Werkstücks 2 und der Entnahme desselben aus dem Biegewerkzeug 4 wird der oder werden die Neigungssensoren 39 nach der Verformung des Trägerelements 44 durch dieses wiederum in die Ausgangslage zurückverstellt. Anschließend daran kann das nächste zu verformende Blech in das Biegewerkzeug 4 verbracht werden und ein erneuter Biegevorgang durchgeführt werden.

Wie in den Figuren 1 bis 8 weiters angedeutet ist, kann die Winkelerfassungsvorrichtung 46 zusätzlich zum Neigungssensor 39 einen Drehratensensor 48 und/oder einen Temperatursensor 49 umfassen, die mit dem Neigungssensor 39 kombiniert sind und insbesondere mit diesem zu einer baulichen Einheit zusammengefasst sind und ebenfalls mit der Steuerungsvorrichtung 24 verbunden sind. Eine derartige Kombination ist in allen dargestellten und zuvor beschriebenen Ausführungsformen möglich und ergeben sich daraus im folgenden beschriebene Vorteile. Die Platzierung der optionalen weiteren Sensoren kann dabei auf dieselbe Weise und mit denselben Mitteln erfolgen wie zuvor beim Neigungssensor 39 beschrieben.

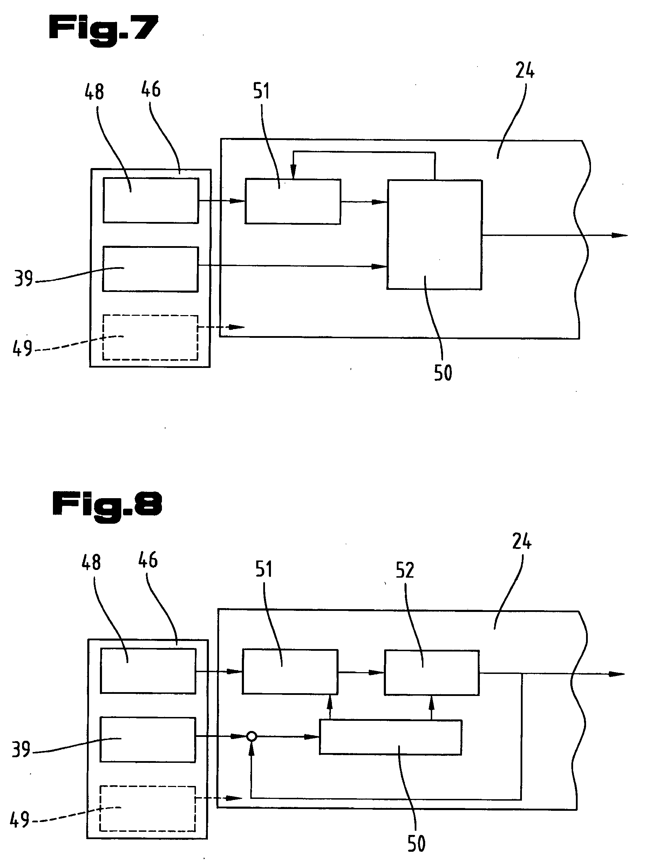

In Fig. 7 und Fig. 8 ist gezeigt, dass die vom Neigungssensor 39 gemessenen Neigungswinkel 43 mit Messwerten des Drehratensensors 48 von der Steuervorrichtung 24 verknüpft werden und dadurch eine noch höhere Genauigkeit und Zuverlässigkeit der Ermittlung des Neigungswinkels 43 erzielt werden kann. Die mittels des Drehratensensors 48 in Bezug auf eine oder mehrere Achsrichtungen gemessenen Winkelgeschwindigkeiten des Drehratensensors 48 werden in der Steuerungsvorrichtung 24 durch ein rechnerisches Integrationsverfahren in einen zurückgelegten Drehwinkel umgerechnet, wobei als Integrationskonstante eine vom Neigungssensor 39 gelieferter Neigungswinkel als Referenz herangezogen wird.

Eine solche Verwendung von zwei unterschiedlichen Sensorarten vereint die Vorteile beider Sensortypen, da einerseits der Neigungssensor 39 eine hohe Messgenauigkeit mit geringem Nullpunktfehler, jedoch eine relativ träge Messwerterfassung besitzt und andererseits der Drehratensensor 48 eine hochdynamische schnelle Messwerterfassung besitzt, allerdings mit dem Nachteil eines merklichen Nullpunktfehlers und einer Sensordrift, wodurch die Nachteiler beider Systeme durch Fusion bzw. Verknüpfung der Messwerte weitgehend eliminiert werden können.

Insbesondere eine Verknüpfung unter Verwendung eines sogenannten Kalman-Filters, dessen Prinzip z.B. in der Inertialnavigation von Flugzeugen häufig Anwendung findet, können von den Sensoren 39, 48, 49 verursachte Störungen und Messwertverfälschungen durch Anwendung von Schätzfunktionen für den tatsächlichen Messwert bzw. Neigungswinkel 43 stark reduziert werden.

In dem in Fig. 7 dargestellten Schema wird dabei der Kaiman-Filter 50 dazu verwendet, direkt einen verbesserten Schätzwert für den aus den gemessenen Winkelgeschwindigkeiten integrierten Drehwinkel zu ermitteln, wozu die vom Neigungssensor 39 gelieferten Messwerte herangezogen werden und die vom Kalman-Filter 50 gelieferten Schätzwerte einem Korrekturglied 51 für den Messwert der Winkelgeschwindigkeit zugeführt werden.

Alternativ kann wie in Fig. 8 dargestellt der Kalman-Filter 50 auch dazu verwendet werden, aus einer Differenz zwischen aus dem Neigungssensor 39 ermittelten Neigungswinkel 43 und dem mittels Drehratensensor 48 errechneten Neigungswinkel 43 einen Schätzwert für den Messfehler des vom Neigungssensor 39 gemessenen Neigungswinkel 43 zu ermitteln und diesen geschätzten Fehler einem Korrekturglied 51 für die Drehratenmessfehler und einem Korrekturglied 52 für den Neigungswinkelmessfehler zuzuführen. Dadurch kann eine höhere Dynamik der Winkelmessung erreicht werden und es kann in der Zustandsbeschreibung des Kalman-Filters auf die Winkelgeschwindigkeit verzichtet werden. Die Integration der geschätzten Winkelgeschwindigkeit erfolgt hierbei, anders wie im Schema gemäß Fig. 7, außerhalb des Kalman-Filters.

In Fig. 7 und Fig. 8 ist weiters die Option eines Temperatursensors 49 zur Durchführung einer Temperaturkompensation angedeutet.

Der Ordnung halber sei abschließend darauf hingewiesen, dass zum besseren Verständnis des Aufbaus der Fertigungsanlage 1, insbesondere deren durch den oder die Neigungssensoren 39 gebildeten Winkelerfassungsvorrichtung 46, diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

**Bezugszeichenaufstellung**

| | | | |
|---|---|---|---|
| 1 | Fertigungsanlage | 31 | Greiffinger |
| 2 | Werkstück | 32 | Greiffinger |
| 3 | Biegepresse | 33 | Arbeitsebene |
| 4 | Biegewerkzeug | 34 | Biegebereich |
| 5 | Biegestempel | 35 | Schenkel |
| | | | |
| 6 | Biegegesenk | 36 | Schenkel |
| 7 | Maschinengestell | 37 | Biegewinkel |
| 8 | Bodenplatte | 38 | Bezugsebene |
| 9 | Seitenwange | 39 | Neigungssensor |
| 10 | Seitenwange | 40 | Bezugsfläche |
| | | | |
| 11 | Querverband | 41 | Referenzebene |
| 12 | Fronstirnfläche | 42 | Referenzebene |
| 13 | Pressbalken | 43 | Neigungswinkel |
| 14 | Frontstirnfläche | 44 | Trägerelement |
| 15 | Linearführung | 45 | Verbindungsleitung |
| | | | |
| 16 | Pressbalken | 46 | Winkelerfassungsvorrichtung |
| 17 | Stirnfläche | 47 | Messstation |
| 18 | Stirnfläche | 48 | Drehratensensor |
| 19 | Werkzeugaufnahme | 49 | Temperatursensor |
| 20 | Werkzeugaufnahme | 50 | Kalman-Filter |
| | | | |
| 21 | Antriebsanordnung | 51 | Korrekturglied |
| 22 | Antriebsmittel | 52 | Korrekturglied |
| 23 | Energienetz | | |
| 24 | Steuerungsvorrichtung | | |
| 25 | Eingabeterminal | | |
| | | | |
| 26 | Spindeltrieb | | |
| 27 | Stellmittel | | |
| 28 | Manipulator | | |
| 29 | Vorratsstapel | | |
| 30 | Greifzange | | |

## Patentansprüche

1. Fertigungsanlage (1), insbesondere für das Abkanten von aus Blech zu fertigenden Werkstücken (2), umfassend eine Biegepresse (3), insbesondere eine Abkantpresse, mit Pressbalken (13, 16), zumindest ein Biegewerkzeug (4), wie Biegestempel (5) und Biegegesenk (6), welches mit den Pressbalken (13, 16) verbunden ist, und zumindest eine Winkelerfassungsvorrichtung (46) zur Ermittlung einer Winkelstellung zumindest eines durch einen Biegevorgang gebildeten Schenkels (35, 36) des Werkstücks (2) bezüglich einer Referenzebene (41, 42), wobei die Winkelerfassungsvorrichtung (46) zumindest einen Neigungssensor (39) umfasst, der eine Bezugsfläche (40) aufweist und der Neigungssensor (39) mit der Bezugsfläche (40) an einem Flächenabschnitt zumindest eines der Schenkel (35, 36) des Werkstücks (2) anlegbar von der Winkelerfassungsvorrichtung (46) gelagert ist, **dadurch gekennzeichnet, dass** der Neigungssensor (39) ein Neigungssensor (39) mit einer innerhalb des Neigungssensors (39) selbst enthaltenen und auf die Richtung der Schwerkraft bezogenen Referenzebene (41, 42) ist.

2. Fertigungsanlage (1) nach Anspruch 1, **dadurch gekennzeichnet, dass** der Neigungssensor (39) als einachsiger Sensor ausgebildet ist.

3. Fertigungsanlage (1) nach Anspruch 1, **dadurch gekennzeichnet, dass** der Neigungssensor (39) als zweiachsiger Sensor ausgebildet ist.

4. Fertigungsanlage (1) nach einem der Ansprüche 1 bis 3, **dadurch gekennzeichnet, dass** der Bezugsfläche (40) mehrere unterschiedlich orientierte Neigungssensoren (39) zugeordnet sind, wodurch die Winkelerfassungsvorrichtung (46) einen Gesamtmessbereich zur Neigungsermittlung aufweist und der Gesamtmessbereich in mehrere jeweils einem Neigungssensor (39) zugeordnete, insbesondere einander überlappende, Teilmessbereiche unterteilt ist.

5. Fertigungsanlage (1) nach einem der Ansprüche 1 bis 4, dadurch gekenntzeichnet, dass der Neigungssensor (39) an einem elastisch verformbaren Trägerelement (44) angeordnet und mit diesem verbunden ist, wobei das Trägerelement (44) mit dem Biegewerkzeug (4), insbesondere dem Biegestempel (5), verbunden ist und der Neigungssensor (39) von einer von den Pressbalken (13, 16), insbesondere dem daran gehaltenen Biegewerkzeug (4), definierten Arbeitsebene (33) in senkrechter Richtung bezüglich der Arbeitsebene (33) distanziert angeordnet ist.

6. Fertigungsanlage (1) nach einem der vorhergehenden Ansprüche, **dadurch gekennzeichnet, dass** die Winkelerfassungsvorrichtung (46) zumindest zwei jeweils an einem durch einen Biegevorgang gebildeten Schenkel (35, 36) des zu fertigenden Werkstücks (2) anlegbare Neigungssensoren (39) zur Ermittlung der Winkelstellung umfasst.

7. Fertigungsanlage (1) nach einem der vorhergehenden Ansprüche, dadurch gekennzeichnen, dass die Winkelerfassungsvorrichtung (46) einen Drehratensensor (48) umfasst, dessen Messwerte in einer Steuerungsvorrichtung (24) der Winkelerfassungsvorrichtung (46) mit den Messwerten des Neigungssensors (39) verknüpfbar sind.

8. Fertigungsanlage (1) nach einem der vorhergehenden Ansprüche, **dadurch gekennzeichnet, dass** die Winkelerfassungsvorrichtung (46) einen Temperatursensor (49) umfasst, dessen Messwerte an eine Steuerungsvorrichtung (24) der Winkelerfassungsvorrichtung (46) zur Temperäturkompensation der Messwerte von Neigungssensor (39) bzw. Drehratensensor (48) übertragbar sind.

9. Verfahren zur Ermittlung einer Winkelstellung von zumindest einem durch einen Biegevorgang gebildeten Schenkel (35, 36) eines Werkstücks (2) bezüglich einer Referenzebene (41, 42) mittels einer Winkelerfassungsvorrichtung (46) wobei die Winkelerfassungsvorrichtung (46) zumindest einen Neigungssensor (39) umfasst und dieser mit seiner Bezugsfläche (40) an einem Flächenabschnitt zumindest eines der Schenkel (35, 36) des Werkstücks (2) daran anliegend angeordnet wird und dabei vom Neigungssensor (39) bezüglich der Referenzebene (41, 42) ein Neigungswinkel (43) ermittelt wird, **dadurch gekennzeichnet, dass** der Neigungssensor (39) ein Neigungssensor (39) mit einer innerhalb des Neigungssensors (39) selbst enthaltenen und auf die Richtung der Schwerkraft bezo genen Referenzebene (41, 42) ist.

10. Verfahren nach Anspruch 9, **dadurch gekennzeichnet, dass** der vom Neigungssensor (39) ermittelte Neigungswinkel (43) mittels eines einachsigen Sensors ermittelt wird.

11. Verfahren nach Anspruch 9, **dadurch gekennzeichnet, dass** der vom Neigungssensor (39) ermittelte Neigungswinkel (43) mittels eines zweiachsigen Sensors ermittelt wird.

12. Verfahren nach einem der Ansprüche 9 bis 11, **dadurch gekennzeichnet, dass** der Neigungssensor (39) während des Biegevorganges am Flächenabschnitt des Schenkels (35, 36) des Werkstücks (2) anliegend gehalten wird.

13. Verfahren nach einem der Ansprüche 9 bis 12, **dadurch gekennzeichnet, dass** der Neigungssensor (39) am Flächenabschnitt des Schenkels (35, 36) des Werkstücks (2) mit einem Haltemittel feststehend daran gehalten wird.

14. Verfahren nach einem der Ansprüche 9 bis 13, **dadurch gekennzeichnet, dass** an beiden Schenkeln (35, 36) des Werkstücks (2) jeweils ein Neigungssensor (39) angelegt wird.

15. Verfahren nach einem der Ansprüche 9 bis 14, **dadurch gekennzeichnet, dass** die Messwerte des Neigungssensors (39) mit Messwerten eines Drehratensensors (48) verknüpft werden, wobei die aktuelle Winkellage durch Integration der vom Drehratensensor (48) gemessenen Winkelgeschwindigkeitswerte ermittelt wird und die Messwerte des Neigungssensors (39) als Referenzwerte, insbesondere zur Festlegung der Integrationskonstante, verwendet werden.

## Claims

1. Production plant (1), in particular for folding workpieces (2) to be produced from sheet metal, comprising a bending press (3), in particular a press brake, having a press beam (13, 16), at least one bending tool (4), such as a bending punch (5) and bending die (6), which is connected to the press beam (13, 16), and at least one angle-measuring device (46) for determining an angular position of at least one limb (35, 36) of the workpiece (2) formed by a bending operation relative to a reference plane (41, 42), wherein the angle-measuring device (46) comprises at least one inclination sensor (39) that has a reference surface (40), and the inclination sensor (39) is supported by the angle-measuring device (46) so that it can be placed with the reference surface (40) lying in contact with a surface portion of at least one of the limbs (35, 36) of the workpiece (2), **characterized in that** the inclination sensor (39) is an inclination sensor (39) with a reference plane (41, 42) relative to the direction of gravity and contained inside the inclination sensor (39) itself.

2. The production plant (1) according to claim 1, **characterized in that** the inclination sensor (39) is a single axis sensor.

3. The production plant (1) according to claim 1, **characterized in that** the inclination sensor (39) is a biaxial sensor.

4. The production plant (1) according to any one of claims 1 to 3, **characterized in that** a plurality of differently oriented inclination sensors (39) is assigned to the reference surface (40) so that the angle-measuring device (46) has a total measuring range for determining inclination, and the total measuring range is subdivided into a plurality of in particular mutually overlapping partial measurement ranges each assigned to an inclination sensor (39).

5. The production plant (1) according to any one of claims 1 to 4, **characterized in that** the inclination sensor (39) is disposed on and connected to an elastically deformable support element (44), wherein the support element (44) is connected to the bending tool (4), in particular to the bending punch (5), and the inclination sensor (39) is disposed at a distance apart from a working plane (33) defined by the press beam (13, 16), in particular the bending tool (4) retained thereon, in a vertical direction with reference to the working plane (33).

6. The production plant (1) according to any one of the preceding claims, **characterized in that** the angle-measuring device (46) comprises at least two inclination sensors (39) for determining the angular position, each of which can be placed on a limb (35, 36) of the workpiece (2) to be produced formed by a bending operation.

7. The production plant (1) according to any one of the preceding claims, **characterized in that** the angle-measuring device (46) comprises a rotary rate sensor (48), the measurement values of which can be correlated with the measurement values of the inclination sensor (39) in a control device (24) of the angle-measuring device (46).

8. The production plant (1) according to any one of the preceding claims, **characterized in that** the angle-measuring device (46) comprises a temperature sensor (49), the measurement values of which can be transferred to a control device (24) of the angle-measuring device (46) for a temperature compensation of the measurement values from the inclination sensor (39) and rotary rate sensor (48).

9. A method for determining an angular position of at least one limb (35, 36) of a workpiece (2) formed by a bending operation relative to a reference plane (41, 42) by means of an angle-measuring device (46), wherein the angle-measuring device (46) comprises at least one inclination sensor (39) which is disposed with its reference surface (40) lying in contact with a surface portion of at least one of the limbs (35, 36) of the workpiece (2), and an angle of inclination (43) relative to the reference plane (41, 42) is determined by the inclination sensor (39), **characterized in that** the inclination sensor (39) is an inclination sensor (39) with a reference plane (41, 42) relative to the direction of gravity and contained inside the inclination sensor (39) itself.

10. The method according to claim 9, **characterized in that** the angle of inclination (43) determined by the inclination sensor (39) is determined by means of a single axis sensor.

11. The method according to claim 9, **characterized in that** the angle of inclination (43) determined by the inclination sensor (39) is determined by means of a biaxial sensor.

12. The method according to any one of claims 9 to 11, **characterized in that** the inclination sensor (39) is held in contact with the surface portion of the limb (35, 36) of the workpiece (2) during the bending operation.

13. The method according to any one of claims 9 to 12, **characterized in that** the inclination sensor (39) is held stationary in contact with the surface portion of the limb (35, 36) of the workpiece (2) by means of a holding means.

14. The method according to any one of claims 9 to 13, **characterized in that** an inclination sensor (39) is placed on each of the two limbs (35, 36) of the workpiece (2).

15. The method according to any one of claims 9 to 14, **characterized in that** the measurement values of the inclination sensor (39) are correlated with measurement values of a rotary rate sensor (48), and the current angular position is determined by an integration of the angular velocity values measured by the rotary rate sensor (48) and the measurement values of the inclination sensor (39) are used as reference values, in particular to fix the integration constant.

## Revendications

1. Installation de fabrication (1), en particulier pour le pliage de pièces à usiner (2) devant être fabriquées à partir de tôles, qui comporte une presse à cintrer (3), en particulier une presse à plier, pourvue d'une barre de pression (13, 16), au moins un outil de pliage (4), comme un poinçon de pliage (5) et une matrice de pliage (6), qui est relié à la barre de pression (13, 16), et au moins un dispositif de détection d'angle (46) destiné à déterminer une position angulaire d'au moins un côté (35, 36) de la pièce à usiner(2), formé par un processus de pliage, par rapport à un plan de référence (41, 42), dans lequel le dispositif de détection d'angle (46) comporte au moins un capteur d'inclinaison (39) qui est pourvu d'une surface de référence (40), et le capteur d'inclinaison (39) pourvu de la surface de référence (40) est conservé par le dispositif de détection d'angle (46) en pouvant être appliqué sur un tronçon de surface d'au moins un des côtés (35, 36) de la pièce à usiner (2), **caractérisée en ce que** le capteur d'inclinaison (39) est un capteur d'inclinaison (39) ayant un plan de référence (41, 42) contenu à l'intérieur du capteur d'inclinaison (39) et se référant à la direction de la pesanteur.

2. Installation de production (1) selon la revendication 1, **caractérisée en ce que** le capteur d'inclinaison (39) est réalisé sous la forme d'un capteur à un seul axe.

3. Installation de production (1) selon la revendication 1, **caractérisée en ce que** le capteur d'inclinaison (39) est réalisé sous la forme d'un capteur à deux axes.

4. Installation de production (1) selon l'une quelconque des revendications 1 à 3, **caractérisée en ce que** plusieurs capteurs d'inclinaison orientés différemment (39) sont associés à la surface de référence (40), le dispositif de détection d'angle (46) présentant une plage totale de mesures pour la détermination de l'inclinaison, et la plage totale de mesures étant divisée en plusieurs sous-plages, en particulier se chevauchant mutuellement, couvrant chacune un capteur d'inclinaison (39).

5. Installation de production (1) selon l'une quelconque des revendications 1 à 4, **caractérisée en ce que** le capteur d'inclinaison (39) est agencé sur un élément de support déformable élastiquement (44), et est relié à celui-ci, dans laquelle l'élément de support (44) est relié à l'outil de pliage (4), en particulier le poinçon de pliage (5), et le capteur d'inclinaison (39) est agencé à distance d'un plan de travail défini (33) de l'une des barres de pression (13, 16), en particulier sur lequel l'outil de pliage (4) est supporté, dans une direction perpendiculaire par rapport au plan de travail (33).

6. Installation de production (1) selon l'une quelconque des revendications précédentes, **caractérisée en ce que** le dispositif de détection d'angle (46) présente au moins deux capteurs d'inclinaison (39) pouvant être posés chacun sur un côté (35, 36), formé par un processus de pliage, de la pièce à usiner (2) à fabriquer, pour déterminer la position angulaire

7. Installation de production (1) selon l'une quelconque des revendications précédentes, **caractérisée en ce que** le dispositif de détection d'angle (46) comprend un capteur de vitesse de rotation (48), dont les valeurs de mesure peuvent être combinées dans un dispositif de commande (24) du dispositif de détection d'angle (46) avec les valeurs de mesure du capteur d'inclinaison (39).

8. Installation de production (1) selon l'une quelconque des revendications précédentes, **caractérisée en ce que** le capteur d'inclinaison (39) comprend un capteur de température (49), dont les valeurs de mesure peuvent être transférées à un dispositif de commande (24) du dispositif de détection d'angle (46) pour une compensation de température des valeurs de mesure du capteur d'inclinaison (39) et du capteur de vitesse de rotation (48).

9. Procédé pour déterminer une position angulaire d'au moins un côté (35, 36), formé par un processus de pliage, d'une pièce à usiner (2) par rapport à un plan de référence (41, 42) au moyen d'un dispositif de détection d'angle (46), dans lequel le dispositif de détection d'angle (46) comporte au moins un capteur d'inclinaison (39) qui est pourvu d'une surface de référence (40), et celui-ci pourvu de sa surface de référence (40) est agencé contre un tronçon de surface d'au moins un des côtés (35, 36) de la pièce à usiner (2), un angle d'inclinaison (43) étant ainsi déterminé par le capteur d'inclinaison (39) par rapport au plan de référence (42) **caractérisé en ce que** le capteur d'inclinaison (39) est un capteur d'inclinaison (39) ayant un plan de référence (41, 42) contenu à l'intérieur du capteur d'inclinaison (39) et se référant à la direction de la pesanteur.

10. Procédé selon la revendication 9, **caractérisé en ce que** l'angle d'inclinaison (43) déterminé par le capteur d'inclinaison (39) est déterminé au moyen d'un capteur à un seul axe.

11. Procédé selon la revendication 9, **caractérisé en ce que** l'angle d'inclinaison (43) déterminé par le capteur d'inclinaison (39) est déterminé au moyen d'un capteur à deux axes.

12. Procédé selon l'une quelconque des revendications 9 à 11, **caractérisé en ce que** le capteur d'inclinaison (39), pendant le processus de pliage, est maintenu contre le tronçon de surface partie du côté (35, 36) de la pièce à usiner (2).

13. Procédé selon l'une quelconque des revendications 9 à 12, **caractérisé en ce que** le capteur d'inclinaison (39) est maintenu de manière fixe sur le tronçon de surface du côté (35, 36) de la pièce à usiner (2) à l'aide de moyens d'immobilisation.

14. Procédé selon l'une quelconque des revendications 9 à 13, **caractérisé en ce qu'**un capteur d'inclinaison (39) est appliqué sur chaque côté (35, 36) de la pièce à usiner (2).

15. Procédé selon l'une quelconque des revendications 9 à 14, **caractérisé en ce que** les valeurs de mesure du capteur d'inclinaison (39) sont associées aux valeurs de mesure d'un capteur de vitesse de rotation (48), dans lequel la position angulaire actuelle est déterminée par l'intégration de la valeur de vitesse angulaire mesurée par le capteur de vitesse de rotation (48), et les valeurs de mesure du capteur d'inclinaison (39) sont utilisées comme valeurs de référence pour déterminer en particulier la constante d'intégration.
